# EUROPEAN PATENT SPECIFICATION

(11) **EP 3 517 281 B1**
(45) Date of publication and mention of the grant of the patent: **31.12.2025**
(21) Application number: 17852364.3
(22) Date of filing: 20.09.2017
(51) Int. Cl.: B29C 70/48, B29C 70/54, B29C 70/44, B29C 70/46

(54) **ASSISTED SEMI-AUTOMATIC FILM COMPRESSION FORMING PROCESS**
VERFAHREN ZUR UNTERSTÜTZTEN HALBAUTOMATISCHEN FOLIENKOMPRIMIERUNGSFORMUNG
PROCÉDÉ SEMI-AUTOMATIQUE ASSISTÉ DE FAÇONNAGE PAR COMPRESSION DE FILM

(30) Priority: 20.09.2016 CN 201610835359
(43) Date of publication of application: 31.07.2019
(73) Proprietor: Jiangsu Hengrui Carbon Fiber Technology Co., Ltd., Changshu, Jiangsu 215500 (CN)
(72) Inventor: SIMONET SUAU, Bartolome Miguel, Pol in pta. Cadiz 11591 (ES); GU, Yongtao, Shanghai 200041 (CN)
(74) Representative: Lavoix
(86) International application number: PCT/CN2017/102405
(87) International publication number: WO 2018/054296

(56) References cited:
- CN-A- 104 066 560
- CN-U- 204 431 750
- FR-A1- 2 673 571
- GB-A- 2 066 144

## Description

The present application claims priority of Chinese application No. 201610835359.X, filed on September 20, 2016, entitled "Semi-automatic membrane-assisted Compression Molding Process".

### Technical field

Provided is a system for semi-automatic membrane-assisted compression molding process in combination with an actuator and the method of using the same.

### Background

Polymer-based fiber reinforced composites have a wide range of applications in automotive, aerospace, exercise machine, biomedical and other fields due to their low specific gravity, high specific strength and high specific modulus. Manufacturing technologies of composites are various according to the shape, size and property as required for the finished product. In view of the structural strength and irregular shape of the finished product, the molding processes mainly comprise vacuum bag molding and Resin Transfer Moulding (RTM), etc. It is desired that the composites shall have good physical and mechanical properties as well as high fiber volume fraction.

The vacuum bag molding allows the resin to impregnate the reinforcement by applying a vacuum in a polymer bag to cause external air pressure to act on the polymer bag so as to compact the reinforcement sealed therein. The RTM uses a mold instead of a polymer membrane. The fiber reinforcement is placed in a molding cavity, and the resin is injected into the molding cavity by pressure, impregnated through the glass fiber reinforcement, and die-released after curing.

The pressure applied on the fiber reinforcement is critical for the composite manufacture. On one hand, the fiber reinforcement may be well adhered to the mold. On the other hand, the fiber material can be compressed and its volume fraction in the composite may be increased. In the prior art, a consistent pressure is applied to each parts of a vacuum bag or a rigid mold during the manufacture of the fiber reinforcement. For an article having complicated shape, the fiber reinforcement located in corners or with particular shape, however, needs a higher pressure than that required in the flat regions. Accordingly, an excessively high pressure is applied on the other regions of the fiber reinforcement, increasing energy consumption and causing the instability of the manufactured material.

GB2066144A discloses a method and apparatus to obtain, by molding, products in reinforced resin, in which the reinforcing armour consists, in general, of fabric material and which, in relation to the required application characteristics of the product, may take on a pre-determined shape.

FR2673571A1 discloses a method of manufacturing a laminate consisting of fibrous reinforcements which are impregnated with thermosetting resin, characterised in that: a) the reinforcements are placed in a mould; b) the mould is closed by a flexible membrane forming the bottom of a cover to which the membrane is bonded in a sealed manner; c) a vacuum is created between the mould and the flexible membrane; d) the impregnation resin is injected into the mould between the latter and the flexible membrane; e) a fluid, under a pressure P of a few bar, is sent into the cover, that is to say into the chamber formed by the cover and the flexible membrane forming its bottom and closing the mould, while at the same time allowing the excess resin to escape via the resin-injection and vacuum-application channels.

### Summary

If a segmental mold is designed to match a specific local region, different pressures can be applied to different regions of the fiber reinforcement purposely, allowing for the application of high pressure to regions where higher pressure is required and of conventional pressure for other parts. Thus, the system may be simplified, the energy consumption and the cost for the auxiliary material may be cut down, and the manufacture of composite may be more flexible. In order to achieve such object, it is necessary to flexibly adjust the pressure and their corresponding value applied to different regions of the composite during the manufacture, while also ensure good filling and impregnation of the fiber reinforcement by the curable material.

Therefore, there is provided a method for the manufacture of a composite, as defined in the appended claims.

### Brief description of the drawings

Figure 1 is a flow chart showing a preferable embodiment of the method for manufacturing a composite according to the invention.
Figure 2 is a schematic diagram showing an open state of the mold according to the disclosure.
Figure 3 is a schematic diagram showing a close state of the mold according to the disclosure.

### Description of Reference Numerals

| | | | |
|---|---|---|---|
| 1. | fiber reinforcement | 2. | lower mold |
| 3. | upper mold | 4. | flexible membrane |
| 5. | pressing machine | 6. | vacuum inlet |
| 7. | actuator | 8. | curable material inlet |
| 9. | fluid inlet | 10. | direction |
| 11. | temperature controlling system | | |

### Steps S100-S106.

### Detailed Description

The disclosure is further described in details below, and it is understood that the terms are intended to be illustrative, and not restrictive.

Unless otherwise defined, the technical and scientific terms used herein have the same meanings as those commonly understood by one skilled in the art. If there is any contradiction, the definition provided by the present application shall prevail. When an amount, concentration, or other value or parameter is expressed in the form of a range, a preferred range, or a preferred numerical upper limit and a preferred numerical lower limit, it should be understood that it equals to specifically disclosing any range as formed by combining any upper limit of a range or preferred value with any lower limit of a range or preferred value, regardless of whether the said range is specifically disclosed. Unless otherwise indicated, the numerical range listed herein encompasses the end points of the range and all integers and fractions (decimals) within that range.

The terms "about", "approximately" when used in conjunction with the numerical variable, generally mean that the value of the variable and all the values of the variable are within the experimental error (e.g., within a 95 % confidence interval for the average value) or within the range of ±10 % or more of the specified value.

The expression "comprise" or its synonyms "contain", "include", "have" or the like is open-ended, which does not exclude other unlisted elements, steps or ingredients. The expression "consist of" excludes any unlisted elements, steps or ingredients. The expression "substantially consist of" refers to specified elements, steps or ingredients within a given range, together with optional elements, steps or components which do not substantively affect the basic and novel feature of the claimed subject matter. It should be understood that the expression "comprise" encompasses the expressions "substantially consist of" and "consist of".

The term "curable material" according to the invention refers to a material which may be cured under some conditions, optionally in the presence of a curing agent, for example aliphatic amines, aromatic amines. The conditions for initiating a curing reaction are well known in the art, including but not limited to visible light photo-curing, UV curing, heat curing, etc. Heat curing is preferable. **In** a preferable embodiment, the curable material is resin, including but not limited to epoxy resin, phenolic resin, unsaturated polyester resin, furan resin or the like.

The term "fiber reinforcement" according to the invention refers to a fiber material which can serve as the skeleton of the composite and may comprise for example one or more sheet material (laminates). Through the pressure applied, the fiber reinforcement may be adapted to the mold and processed into a desired shape. The examples of the fiber reinforcement comprise but not limited to glass fiber, carbon fiber, aramid fiber, ultra high molecular weight polyethylene fiber or the like. Other examples of the fiber reinforcement are fabric, woven or unidirection fiber reinforcement. The material which may be processed with the system and method according to the invention may be prepreg.

The term "flexible membrane" according to the invention refers to a membrane with certain toughness, elasticity, strength and heat stability which can withstand the pressure and temperature applied under working conditions.

The term "fluid" according to the invention may be gas or liquid. The gas comprises but not limited to air, CO₂, He, nitrogen and any mixture thereof. The liquid comprises but not limited to petroleum-based hydraulic fluid or the like. The fluid used in the present invention may be compressible, for example a compressed air may be used.

### The system according to the disclosure

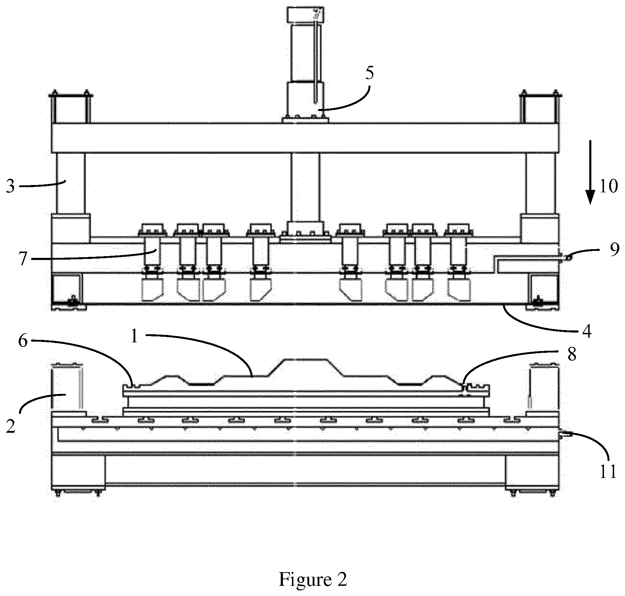

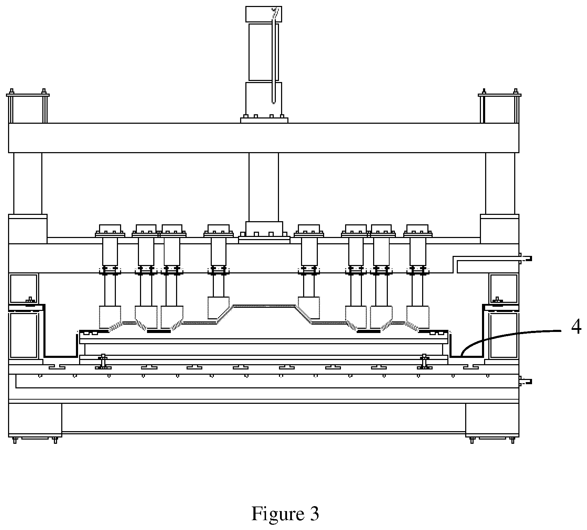

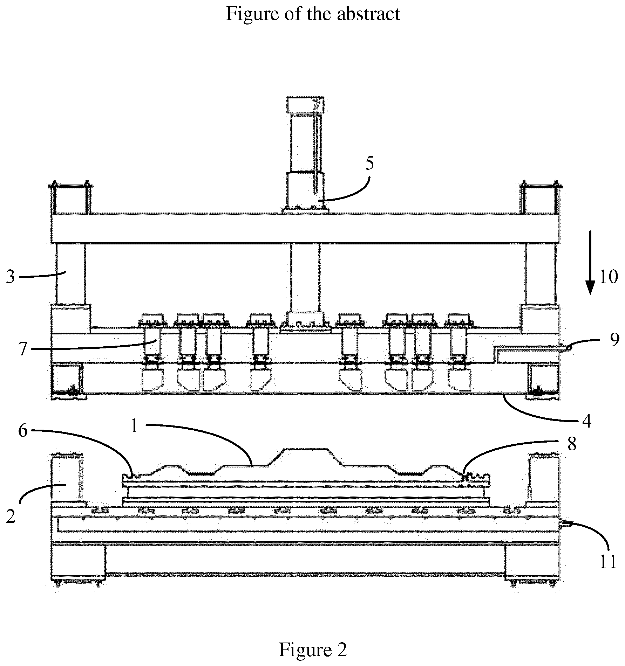

In a preferable embodiment as shown in Figs. 2 and 3, lower mold 2 may have a dismountable molding component, of which the shape and configuration shall be suitable to the composite to be manufactured. Upper mold 3 is connected to flexible membrane 4 and supports the same, on which a pressure may be applied with a fluid. In another embodiment, upper mold and/or lower mold may have a heating and/or cooling device, i.e. may be equipped with temperature controlling system 11, so as to control the system temperature, curing temperature and the removal of the composite from the mold. In a specific embodiment, the lower mold and/or the molding component thereon may be changed so as to manufacture various components with various shapes. In case of particular shapes of the components, the lower mold may comprise one or more actuators 7. In the system, when the upper and lower molds are closed, flexible membrane 4 may attach to fiber reinforcement 1, rendering the latter adapting the mold.

In another embodiment, the system may comprise a pressing machine 5. The open and close state of the upper and lower molds may be controlled by the pressing machine. The closing pressure of the pressing machine may be at least about 100 Tn/m² (about 9.8 bar), for example 100-200, 100-300 Tn/m² etc. but not limited thereto. Furthermore, the pressing machine may apply sufficient pressure so as to support the pressure created on the membrane and that generated by the actuator. In a preferable embodiment, the pressing machine and the actuators may be controlled by a hydraulic system.

Due to the presence of flexible membrane, the system may comprise a vacuum unit connected to the lower mold so as to apply vacuum to the fiber reinforcement such that the air therein can be removed. Meanwhile, sufficient filling and impregnation of the reinforcement by the curable material may be guaranteed. When the vacuum is applied, the flexible membrane may sufficiently attach to the reinforcement, thus applies a certain pressure on the same, which for example may facilitate the reinforcement to be further attached to the molding component, and is beneficial to the molding of the material. There is no particular limitation to the number of the vacuum unit. If desired, the number of vacuum unit may be increased, that is one or more vacuum units may be used. In case no vacuum is applied, the vacuum unit may also function as an exhaust port.

In the system, a pressurizing device may be equipped between the upper mold and the flexible membrane. Therefore, a fluid may be applied on the flexible membrane via fluid inlet 9, thereby a sufficient and uniform pressure may be further applied on the material to be processed.

Preferably, the pressure applied by the fluid may be employed upon vacuum application to the fiber reinforcement, thereby facilitating the flexible membrane to be closely attached to the fiber reinforcement, and more contributing to air removal and aided molding. However, the value of this pressure should not interfere with the injection of the curable material.

Preferably, the pressure applied by the fluid may also be employed after injection of the curable material to ensure sufficient filling and impregnation of the fiber reinforcement with the curable material, thereby guaranteeing the shape of the composite. The pressure applied in this way may also mold the material to be processed.

Since the fluid may exchange the heat during curing of the curable material, the curing temperature may be better controlled. The types of the suitable fluid may be chosen according to the exothermic behavior of various curing reactions. The overall pressure applied by the fluid on the composite and/or the local pressure applied by the actuators on the composite can assure the high quality and high precision molding of the composite.

In another embodiment according to the invention, the curable material, the lower mold, the dismountable molding component and/or the flexible membrane may (for example, on the surface) comprise demoulding agent so as to facilitate the detachment of the manufactured composite from the system. The examples of the demoulding agent include but not limited to high viscous polysiloxane, surfactant or the like.

In an embodiment according to the invention, it is preferable that the flexible membrane is a membrane with certain toughness, elasticity, strength and heat stability which can withstand the pressure and temperature applied under working conditions. In a preferable embodiment, the flexible membrane may be polymer membrane, for example but not limited to nylon membrane, polyimide membrane, polypropylene membrane, polytetrafluoroethylene membrane or the like. The flexible membrane should maintain its good properties under continuous curing temperature, working pressure or the change thereof. The flexible membrane should have excellent permeation resistance such that the fluid and the flowable curable material do not penetrate the flexible membrane. It is preferable that there is little or no strong interaction between the flexible membrane and the curable material so as to facilitate a complete detachment of the membrane from the composite after curing. The detachment for example may be realized by the presence of demoulding agent. The flexible membrane generally may have a thickness of about 0.1-5 mm, for example about 0.5-4 mm, such as about 1, 2, 3, 4 mm. In an embodiment according to the invention, the flexible membrane may be reused, which may save the materials and time especially during continuous batch processing. It is preferable that the flexible membrane is hermetically connected to the upper mold. It is further preferable that the flexible membrane may apply a pressure on the fiber reinforcement through the pressurizing device. Conventionally, the pressing machine-based technology needs high parallel control to assure the product quality. Due to the overall pressure on the flexible membrane, there is relatively lower requirement for precision of parallel control.

In the system, one or more dismountable actuators are placed between the upper mold and the flexible membrane. These actuators can work independently. By using one or more actuators, different pressures can be applied to local regions of the materials to be processed as required, in particular, flexible process is possible for some specific regions, such as corner or particular shape. It should be understood that the pressures applied by each of the actuators may be the same or different. By dispersing the pressures, the different parts of the fiber reinforcement can be independently applied with the pressure respectively as required so as to improve the property of the material and its adaptation to the mold, simplify the system, save energy and enhance the adaptation of the system to real requirement. It should also be understood that there is no particular limitation to number of the actuators as well as shape of the local molding component at the end of the actuators, both of which can be adjusted according to real requirement so as to adapt various manufacture of the components and reduce the auxiliary material cost, for example, the shape and size of the molding component may be calculated and designed to be suitable for the size and thickness of the composite to be manufactured.

In a preferable embodiment, the local pressures applied by the actuators facilitate sufficient removal of air from fiber reinforcement upon vacuum application and/or impregnation of fiber reinforcement by the curable material, such as improvement of lamination.

Further, by dispersing pressures, flexible and precise pressures may be applied to the region with particular shape or at corner so as to prevent the constant pressure on all the surfaces of the fiber reinforcement. In this way, by a relatively smaller overall pressure, the composite with high physical and mechanical properties can be obtained.

In another embodiment, according to the shape of the article to be processed, one or more curable material inlets 8 can be used for more effective injection of the curable material.

Through the adjustment of the number and pressures of the actuators and the injection conditions, the system can achieve good impregnation of the curable material to the fiber, such that the reinforcement with various shapes and textures can be processed, for example fabric, woven or unidirection fiber reinforcement. The prepreg may also be processed. For example, during the process of the prepreg, when the system is closed and the vacuum is applied from one side or both sides of the flexible membrane to remove the air from the prepreg optionally under the condition that pressure may not be applied on the prepreg. Afterwards, the vacuum may be maintained and an air or fluid pressure is applied on the top of the flexible membrane, which facilitates a good compaction of the prepreg laminate. The process can be improved by the actuator which can, for example, improve the lamination property in small corners.

In the system, system temperature, curing temperature, and removal of the composite from the mold are controlled by temperature controlling system 11. In addition to heating the bottom of the mold using, for example, a heating device, a built-in heating device may be provided. The built-in heating device may be arranged, for example, in a chamber formed by the upper mold and the flexible membrane, or may be embedded in the upper mold. The built-in heating device can be, for example, an infrared (IR) lamp to rapidly heat the fiber reinforcement or laminate through the flexible membrane. Heating can be carried out if necessary. When the actuator may be removed after the compaction of the fiber reinforcement or laminate, a solution using a built-in heating device is preferred since it allows the temperature to be evenly distributed over the fiber reinforcement or laminate. However, the built-in heating device also helps to avoid heat loss if the actuator is not removed, assisting in reaching fast curing temperatures in all fiber reinforcements or laminates. For prepreg, the built-in heating device is particularly preferred.

To shorten cycle time of the manufacture, except for curable material with fast-curing, it is preferable to utilize a cooling device for cooling, for example, temperature is lower to 60-80° C to help removing the manufactured material.

### The method according to the invention

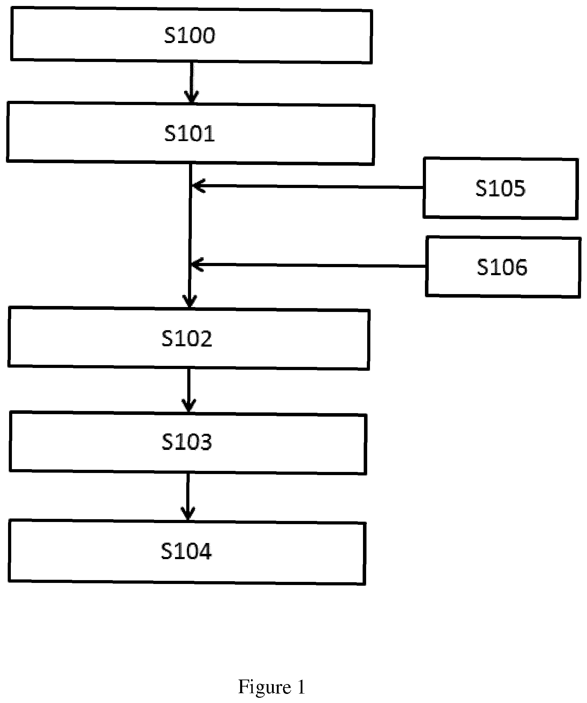

Further provided is a method for manufacturing a composite. Figure 1 is a flow chart showing the preferable embodiment of the method for manufacturing a composite according to the invention. By referring to Figures 2 and 3, the steps of the manufacturing method are illustrated in details as follows.
1) Step S100: a fiber reinforcement is provided on the molding component of a lower mold, the upper mold and lower mold are closed such that a flexible membrane is attached to the fiber reinforcement.

Flexible membrane 4 is fixed to upper mold 3, and fiber reinforcement 1 is placed on lower mold 2. Upper mold 3 and lower mold 2 are closed such that flexible membrane 4 is attached to the fiber reinforcement. Close of the upper and lower molds may be controlled by the pressing machine5.

The closing pressure of the molds may be for example 9.8 bar. The closing velocities for the upper and lower molds may be 5-50 mm/s, for example 5-10 mm/s, 5-40 mm/s, 10-30 mm/s or the like.

2) Step S101: a pressure is applied to the local region of the fiber reinforcement with one or more actuators.

In order to differentiate the pressures applied in various steps, this pressure is designated as first pressure. It should be understood that the pressures on each of the actuators may be the same or different. For the purpose of illustration, the pressures on one or more actuators are collectively designated as the first pressure. By one or more actuators 7 along the direction 10, the first pressure is applied on the local region of fiber reinforcement 1 such that the fiber reinforcement 1 is adapted to lower mold 2.

The first pressure may generally be 0.1-1 bar, for example about 0.1, 0.2, 0.5, 0.8 bar or the like. The first pressure applied on each of the actuators may be the same or different. The velocity of the actuators may be 5-10 mm/s, for example 5, 7, 8, 10 mm/s.

Optionally, Step S105 for applying vacuum may be performed after or concurrently with Step S101. Via the vacuum inlet 6 of vacuum unit, vacuum is applied to the sealed space formed between lower mold 2 and flexible membrane 4 so as to remove air from fiber reinforcement 1.

Optionally, Step S106 for applying pressure by the actuators is performed. A pressure is applied to local region of fiber reinforcement 1 with one or more actuators 7. Likewise, the pressure is designated as second pressure. It should be understood that the pressures on each of the actuators may be the same or different. For the purpose of illustration, the pressures on one or more actuators are collectively designated as the second pressure.

The applied vacuum may be for example about -0.1 to -1.5 bar, for example about -0.2, about -0.3, about -0.4, about -0.5, about -0.8, about -1.0 bar or the like, and -0.8 bar is preferable. Such a vacuum may remove air in a relatively shorter period, for example, in about 5-90 s, for example about 5-50 s, about 20-30 s or the like, and 10-30 s is preferable. If desired, the number of vacuum units may be increased. Application of vacuum and/or the second pressure may render the flexible membrane 4 further attaching to the fiber reinforcement so as to sufficiently remove the air remaining in the fiber reinforcement. Preferably, the second pressure may be higher than the first pressure. The second pressure may be about 0.1-2 bar, for example about 0.2-1.2 bar. Similar to the first pressure, the second pressures on each of the actuators may be the same or different. Preferably, a pressure may be applied on flexible membrane 4 through fluid upon vacuum application. The value of the pressure, however, shall not interfere with the injection of the curable material.

3) Step S102: a curable material is injected into the fiber reinforcement

The curable material is injected into fiber reinforcement 1 via curable material inlet 8. Preferably, the curable material is resin, for example thermosetting resin. The injection time may be about 10 s-120 s, for example about 20-120 s, about 10-50 s and 10-50 s is preferable. The pressure for injection may be about 0.1-5 bar, for example about 0.5-4 bar. If desired, more than one injection units may be used.

Concurrently with the injection of curable material, the negative pressure generated by vacuum may be optionally maintained simultaneously, i.e. without closing the vacuum inlet 6 of the vacuum unit, so as to facilitate the injection of curable material and impregnation to fiber reinforcement.

4) Step S103: after injection, a pressure is applied to the local region of the fiber reinforcement with one or more actuators.

After Step 102, the vacuum application (if any) is stopped, e.g. by closing the vacuum inlet 6 of the vacuum unit. An overpressure is applied to the local region of fiber reinforcement 1 with one or more actuators 7. Likewise, the pressure is designated as third pressure. The third pressure is higher than the first pressure and preferably higher than the second pressure. It should be understand that the pressures on each of the actuators may be the same or different. For the purpose of illustration, the pressures on one or more actuators are collectively designated as the third pressure. The third pressure may be about 1-8 bar, for example 6 bar, preferably about 3.9-5.9 bar (about 4-6 kg/cm²).

Preferably, when an overpressure is applied, a pressure is applied on the flexible membrane with a fluid so as to impose an overall pressure on the fiber reinforcement. Via fluid inlet 9, a pressure is applied on the flexible membrane by the fluid, for example in the form of compressed air or hydraulic pressure. For the purpose of illustration and distinction, the pressure is designated as fourth pressure. The fourth pressure may be about 1-6 bar, for example about 1, 2, 3, 4, 5, 6 bar, and 6 bar is preferable. The fourth pressure for example may be higher than the third pressure. Velocity of the fluid may be 400-900 L/min, for example about 400, 500, 600, 700, 800, 900 L/min, and 800 L/min is preferable. The pressing process per cycle will be done in about less than 30 s

Through the third pressure applied by the actuators and optionally in combination with the fourth pressure applied by the fluid, the curable material may be dispersed uniformly within the fiber reinforcement, excess amount of curable material may be removed as well. It should be noted that the fourth pressure is applied preferably after injection and prior to the finish of curing and is done within a period time as short as possible after injection. For example, it may be done in 1-5 s, preferably in 2 s after injection. A relatively lower injection pressure may lead to good impregnation of fiber. The fourth pressure compacting the fiber reinforcement-resin system may remove excess amount of curable material.

5) Step S104: the curable material is allowed to cure so as to obtain the composite to be manufactured.

The curing time may be about 20min or shorter, for example about 15 min or shorter, such as about 5, 6, 7, 8, 9, 10, 12, 15min or the like. Curing may be adjusted by the temperature controlling system 11 within the lower mold, for example, performed by heating. The curing temperature varies according to the curable material used. For example, it may be about 200°C or lower, for example 190°C or lower, 180°C or lower, 170°C or lower, preferably 150°C or lower. Optionally, heating may be promoted by a built-in heating device, such as an infrared (IR) lamp, disposed within a chamber formed by the upper mold and the flexible membrane or embedded in the upper mold, such that the temperature is uniformly distributed on the fiber reinforcement-resin system. If desired, a curing agent may be added into the curable material. After curing is completed, the composite is obtained. Optionally, a cooling device is applied for cooling for example, temperature is lower to 60-80° C to help removing the composite. For convenience, the curable material, the lower mold, the dismountable molding component and/or the flexible membrane (for example, on the surface) may comprise demoulding agent so as to facilitate the detachment of the finished composite.

It should be understood that the pressures are designated as the first to the fourth for the purpose of differentiating the pressures applied in various steps, which does not mean that these pressures are applied in the sequence as stated nor that they are necessarily the same or different. The values and applying periods of these pressures may vary according to the composite to be processed. It also should be understood that the first to the third pressures may be applied continuously or as a continuous procedure. During the application of pressure, the actuator may not be withdrawn such that the pressure is applied continuously. If necessary, the actuator may be withdrawn or adjusted appropriately such that discontinuous pressures are applied. For example, in case the first to the third pressures are 0.2 bar, 0.6 bar and 6 bar, respectively, the actuator is not withdrawn such that pressure is increased from 0.2 to 0.6 and to 6 bar continuously as required. Alternatively, according to actual demand, the actuator may be withdrawn or adjusted such that the transition states of these three pressures are adjusted. For example, during the procedure from 0.6 to 6 bar, the pressure may be appropriately reduced (even to 0) and then increased until the desired value.

According to the method of the invention, after rejection of resin, through the pressure applied on specific local region of the fiber reinforcement by the actuator and the overall pressure applied on the fiber reinforcement by fluid, a composite with high physical and mechanical properties is obtained at a relatively lower pressure. The working system is simplified and the cost of auxiliary material and energy is reduced. According to the method of the invention, the volume faction of fiber in the manufactured product is increased.

### Example

### Example 1

Carbon fiber reinforcement is spread on lower mold. Upper mold and lower mold are closed such that the polytetrafluoroethylene membrane (2 mm thick) is attached on carbon fiber reinforcement. Upper and lower molds are closed at a speed of 20 mm/s under the control of the pressing machine and the closing pressure is 10 bar. Then, the local regions of the carbon fiber reinforcement are applied with a pressure of 0.2 bar by actuators such that the fiber reinforcement is adapted to lower mold. The speed at which the actuators get close to the carbon fiber reinforcement is 8 mm/s.

Vacuum of -0.8 bar is applied to the sealed space between lower mold and polytetrafluoroethylene membrane via vacuum inlet to remove air in the carbon fiber reinforcement for 15 s. Then the actuators apply a pressure of 1.0 bar to the local regions of carbon fiber reinforcement.

Bisphenol A epoxy resin composition is injected into the carbon fiber material via injection inlet. The injection time is 30 s and pressure is 4 bar. Two injection units are used.

After injection, the vacuum is withdrawn, and actuators apply a pressure of about 6 bar to the local regions of carbon fiber reinforcement. A pressure of 2 bar is applied on the polytetrafluoroethylene membrane with compressed air via fluid inlet. The fluid has a speed of 800 L/min and is applied in 2 s after injection.

The resin is cured by heating with a heater within the lower mold. The curing temperature is 120°C and curing time is 12 min. After curing, the manufactured composite is die-released.

The obtained composite has good mechanical property, a smooth appearance without creases and a high volume fraction of fiber.

## Claims

1. A method for manufacture of a composite with a system, wherein the system comprises a lower mold (2) having a dismountable molding component, on which a fiber reinforcement (1) is placed;an upper mold (3) comprising one or more dismountable actuators (7), and at the end of each of the actuators (7) provided with a local molding component independently, of which the shape is suitable for applying a local pressure at a local region of the composite to be manufactured;a flexible membrane (4) disposed between the molding component and the local molding component, and hermetically connected with the upper mold (3), an overall pressure can be applied to the fiber reinforcement (1) via the flexible membrane (4) by a pressurizing device; and an injection unit for introducing a curable material into the fiber reinforcement; and wherein the method comprises the successive steps of:
1) providing a fiber reinforcement (1) on the molding component of the lower mold (2), closing the upper mold (3) and lower mold (2) such that the flexible membrane (4) is attached to the fiber reinforcement (1);
2) applying a pressure to the local region of the fiber reinforcement (1) with one or more of the actuators (7);
3) injecting a curable material into the fiber reinforcement (1);
4) after injection, applying an overpressure to the local region of the fiber reinforcement (1) with one or more of the actuators (7), wherein the overpressure is higher than the pressure in step 2); and
5) curing the curable material to obtain a manufactured composite.

2. The method according to claim 1, wherein the method further comprises, prior to a step of injecting a curable material, a step of applying vacuum to the fiber reinforcement (1) and applying a pressure to the local region of the fiber reinforcement (1) with one or more of the actuators (7).

3. The method according to claim 1 or 2, wherein in step 4), the method further comprises applying a pressure on the flexible membrane (4) with a fluid such that an overall pressure is applied on the fiber reinforcement (1).

4. The method according to any one of claims 1-3, wherein the step of curing the curable material is performed under the control of a temperature controlling system within the lower mold (2) and/or upper mold (3).

5. The method according to any one of claims 1-4, wherein the curable material is resin.

## Patentansprüche

1. Verfahren zur Herstellung eines Verbundwerkstoffs mit einem System, das System umfassend eine untere Form (2), die eine demontierbare Formgebungskomponente aufweist, auf dem eine Faserverstärkung (1) platziert ist; eine obere Form (3), umfassend einen oder mehrere demontierbare Aktuatoren (7), und die am Ende von jedem der Aktuatoren (7) unabhängig mit einer lokalen Formgebungskomponente versehen ist, deren Form geeignet ist, einen lokalen Druck auf einen lokalen Bereich des herzustellenden Verbundwerkstoffs auszuüben; eine flexible Membran (4), die zwischen der Formgebungskomponente und der lokalen Formgebungskomponente angeordnet ist und hermetisch mit der oberen Form (3) verbunden ist, wobei über die flexible Membran (4) durch eine Druckbeaufschlagungsvorrichtung ein Gesamtdruck auf die Faserverstärkung (1) ausgeübt werden kann; und eine Einspritzeinheit zum Einbringen eines härtbaren Materials in die Faserverstärkung; und wobei das Verfahren die folgenden aufeinanderfolgenden Schritte umfasst:
1) Bereitstellen einer Faserverstärkung (1) auf der Formkomponente der unteren Form (2), Schließen der oberen Form (3) und der unteren Form (2), sodass die flexible Membran (4) an der Faserverstärkung (1) angebracht ist;
2) Ausüben eines Drucks auf den lokalen Bereich der Faserverstärkung (1) mit einem oder mehreren der Aktuatoren (7);
3) Einspritzen eines härtbaren Materials in die Faserverstärkung (1);
4) nach Einspritzen, Ausüben eines Überdrucks auf den lokalen Bereich der Faserverstärkung (1) mit einem oder mehreren der Aktuatoren (7), wobei der Überdruck höher ist als der Druck in Schritt 2); und
5) Härten des härtbaren Materials, um einen hergestellten Verbundwerkstoff zu erlangen.

2. Verfahren nach Anspruch 1, wobei das Verfahren ferner vor einem Schritt des Einspritzens eines härtbaren Materials einen Schritt eines Anlegens von Vakuum an die Faserverstärkung (1) und eines Ausübens eines Drucks auf den lokalen Bereich der Faserverstärkung (1) mit einem oder mehreren der Aktuatoren (7) umfasst.

3. Verfahren nach Anspruch 1 oder 2, wobei das Verfahren in Schritt 4) ferner ein Ausüben eines Drucks auf die flexible Membran (4) mit einem Fluid umfasst, sodass ein Gesamtdruck auf die Faserverstärkung (1) ausgeübt wird.

4. Verfahren nach einem der Ansprüche 1 bis 3, wobei der Schritt eines Härtens des härtbaren Materials unter der Kontrolle eines Temperaturregulierungssystems innerhalb der unteren Form (2) und/oder der oberen Form (3) durchgeführt wird.

5. Verfahren nach einem der Ansprüche 1-4, wobei das härtbare Material Harz ist.

## Revendications

1. Procédé de fabrication d'un composite avec un système, dans lequel le système comprend un moule inférieur (2) ayant un composant de moulage démontable, sur lequel un renfort en fibres (1) est placé ; un moule supérieur (3) comprenant un ou plusieurs actionneurs démontables (7), et à l'extrémité de chacun des actionneurs (7) pourvu indépendamment d'un composant de moulage local, dont la forme est appropriée pour appliquer une pression locale à une région locale du composite à fabriquer ; une membrane souple (4) disposée entre le composant de moulage et le composant de moulage local, et reliée hermétiquement au moule supérieur (3), une pression globale pouvant être appliquée au renfort en fibres (1) via la membrane souple (4) par un dispositif de pressurisation ; et une unité d'injection pour introduire un matériau durcissable dans le renfort en fibres ; et dans lequel le procédé comprend les étapes successives
de :
1) pourvoir un renfort en fibres (1) sur le composant de moulage du moule inférieur (2), en fermant le moule supérieur (3) et le moule inférieur (2) de sorte que la membrane souple (4) soit fixée au renfort en fibres (1) ;
2) l'application d'une pression sur la région locale du renfort en fibres (1) à l'aide d'un ou plusieurs des actionneurs (7) ;
3) l'injection d'un matériau durcissable dans le renfort en fibres (1) ;
4) après l'injection, l'application d'une surpression à la région locale du renfort de fibres (1) avec un ou plusieurs des actionneurs (7), dans lequel la surpression est supérieure à la pression à l'étape 2) ; et
5) le durcissement du matériau durcissable pour obtenir un composite fabriqué.

2. Procédé selon la revendication 1, dans lequel le procédé comprend en outre, avant une étape d'injection d'un matériau durcissable, une étape d'application d'un vide au renfort de fibres (1) et d'application d'une pression à la région locale du renfort de fibres (1) avec un ou plusieurs des actionneurs (7).

3. Procédé selon la revendication 1 ou 2, dans lequel, à l'étape 4), le procédé comprend en outre l'application d'une pression sur la membrane souple (4) à l'aide d'un fluide, de sorte qu'une pression globale est appliquée sur le renfort en fibres (1).

4. Procédé selon l'une quelconque des revendications 1 à 3, dans lequel l'étape de durcissement du matériau durcissable est effectuée sous le contrôle d'un système de régulation de la température à l'intérieur du moule inférieur (2) et/ou du moule supérieur (3).

5. Procédé selon l'une quelconque des revendications 1 à 4, dans lequel le matériau durcissable est une résine.
